# EUROPEAN PATENT SPECIFICATION

(11) **EP 4 563 050 B1**
(45) Date of publication and mention of the grant of the patent: **11.11.2026**
(21) Application number: 24202357.0
(22) Date of filing: 24.09.2024
(51) Int. Cl.: A47L 7/00, A47L 9/00, A47L 11/20

(54) **DOCKING STATION, AND METHOD, APPARATUS AND MEDIUM FOR CONTROLLING DOCKING STATION**
ANDOCKSTATION UND VERFAHREN, VORRICHTUNG UND MEDIUM ZUR STEUERUNG DER ANDOCKSTATION
STATION D'ACCUEIL, ET PROCÉDÉ, APPAREIL ET SUPPORT DE COMMANDE DE STATION D'ACCUEIL

(30) Priority: 30.11.2023 CN 202311630203
(43) Date of publication of application: 04.06.2025
(73) Proprietor: Beijing Xiaomi Mobile Software Co., Ltd., Beijing 100085 (CN)
(72) Inventor: ZHANG, Tiantian, Beijing, 100085 (CN); ZHANG, Wentao, Beijing, 100085 (CN)
(74) Representative: Dehns Germany Partnerschaft mbB

(56) References cited:
- CN-A- 116 269 061
- US-A1- 2019 263 691
- US-A1- 2022 287 532

## Description

### TECHNICAL FIELD

This invention relates to the field of household appliances, and in particular, to a docking station, and a method, an apparatus and a medium for controlling the docking station.

### BACKGROUND

In order to improve the cleaning effect of the sweeping robot, a dirtiness detection module is usually provided on the docking station of the sweeping robot.

Examples can be found in CN 116 269 061 A1, US 2019/26369 A1, US 2022/287532 A1, and AU 2019/420955 A1.

### SUMMARY

In order to overcome problems existing in the related art, this invention provides a docking station, and a method, an apparatus and a medium for controlling the docking station having the features of the independent claims.

According to a first aspect of this invention, a docking station is provided and includes: a station body, provided with a clean water path and a wastewater path, where the clean water path is configured to provide clean water to a cleaning device, the wastewater path is configured to discharge wastewater in the station body, and a water softener is provided on the clean water path; and a dirtiness detection module, including a first conductivity sensor, a second conductivity sensor and a processor, where the first conductivity sensor is provided in the clean water path and located downstream of the water softener, the second conductivity sensor is provided in the wastewater path, and the processor is configured to determine dirtiness information based on detection results of the first conductivity sensor and the second conductivity sensor.

According to a second aspect of this invention, a method for controlling the docking station according to the first aspect is provided and includes: obtaining at least one first conductivity detection value of the clean water path; obtaining at least one second conductivity detection value of the wastewater path; and determining the dirtiness information based on the at least one first conductivity detection value and the at least one second conductivity detection value.

According to a third aspect of this invention, an apparatus for controlling the docking station according to the first aspect is provided and includes: a first obtaining module, configured to obtain at least one first conductivity detection value of the clean water path; a second obtaining module, configured to obtain at least one second conductivity detection value of the wastewater path; and a determining module, configured to determine the dirtiness information based on the at least one first conductivity detection value and the at least one second conductivity detection value.

According to a fourth aspect of this invention, a non-transitory computer-readable storage medium is provided, where instructions in the storage medium, upon being executed by a processor of a terminal, cause the terminal to implement the method according to the second aspect.

It should be understood that the foregoing general description and the following detailed description are exemplary and explanatory only, and do not limit this invention.

### BRIEF DESCRIPTION OF THE DRAWINGS

The accompanying drawings, which are incorporated in and constitute a part of this specification, illustrate embodiments consistent with the invention and together with the description, serve to explain the principles of the invention.
FIG. 1 is a schematic structural diagram of a cleaning device according to some embodiments.
FIG. 2 is a block diagram of a docking station according to some embodiments.
FIG. 3 is a schematic structural diagram of a water softener according to some embodiments.
FIG. 4 is a schematic flowchart of a docking station control method according to some embodiments.
FIG. 5 is a schematic flowchart of a docking station control method according to some other embodiments.
FIG. 6 is a block diagram of a docking station control apparatus according to some embodiments.
FIG. 7 is a block diagram of a cleaning device according to some embodiments.

### DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with this invention. Instead, they are merely examples of apparatuses and methods consistent with aspects of the invention as detailed in the appended claims.

In order to improve the cleaning effect of the sweeping robot, a dirtiness detection module is usually provided on the docking station of the sweeping robot. Exemplarily, the dirtiness detection module in the related art only detects the dirtiness value of the wastewater, resulting in a poor accuracy of the detection results, thereby causing a poor cleaning effect of the sweeping robot when controlling the cleaning of the sweeping robot based on the detection results.

In order to solve the above technical problems, this invention provides a docking station, which is provided with a water softener on the clean water path to soften the clean water in the clean water path, thereby improving the cleaning effect by using softened clean water. The dirtiness detection module includes a first conductivity sensor and a second conductivity sensor, where the first conductivity sensor is able to detect the conductivity in the clean water path and the second conductivity sensor is able to detect the conductivity in the wastewater path. Accordingly, the processor of the dirtiness detection module is able to determine the dirtiness information based on the conductivity in the clean water path and the conductivity in the wastewater path, so as to control subsequent cleaning operations based on the dirtiness information. Since the first conductivity sensor is located downstream of the water softener, the detection accuracy of conductivity in the clean water path can be ensured, thereby ensuring the accuracy of the determined dirtiness information.

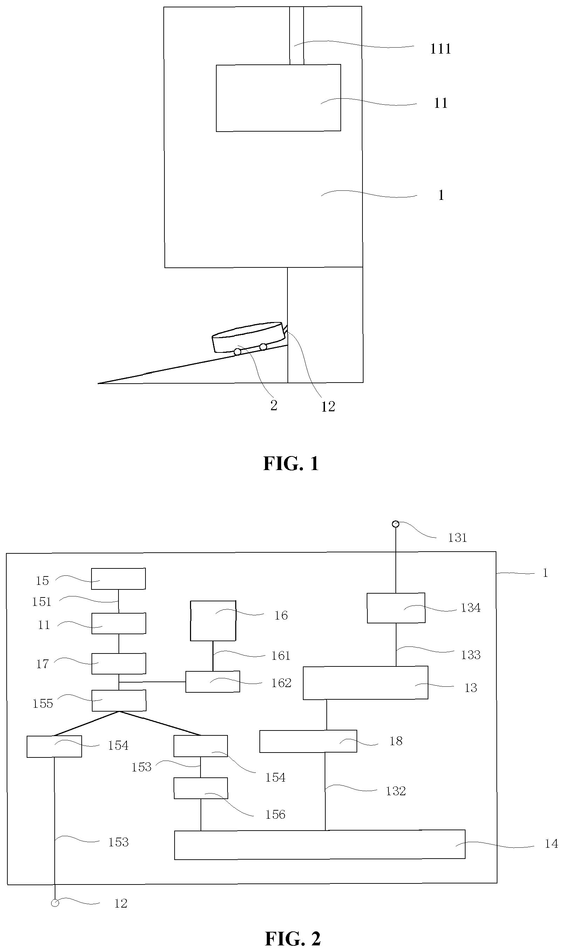

Some embodiments of this invention provide a docking station. As shown in FIG. 1 and FIG. 2, the docking station includes a station body 1 and a dirtiness detection module. The station body 1 is provided with a clean water path and a wastewater path. The clean water path is configured to provide clean water to the cleaning device 2. For example, the cleaning device 2 may be a sweeping robot. For example, the clean water path may be connected to an external water source such as tap water in the user's home. The wastewater path is configured to discharge wastewater in the station body 1. For example, the wastewater path may be connected to a sewer pipe in the user's home to discharge the wastewater to the sewer pipe. A water softener 11 is provided on the clean water path. The water softener 11 is configured to soften the clean water in the clean water path, and the softened clean water is provided to the cleaning device 2.

The hardness of clean water is reduced through softening treatment, which not only effectively improves the cleaning effect when using softened clean water for cleaning, but also effectively reduces the risk of scaling inside the docking station, thereby reducing the failure rate of water-passing components in the docking station, improving reliability of the docking station and, thus, improving the user experience. It can be understood that the water-passing components refer to the components through which the clean water flows.

The dirtiness detection module includes a first conductivity sensor 17, a second conductivity sensor 18 and a processor. The first conductivity sensor 17 is provided on the clean water path and configured to detect the conductivity in the clean water path. The second conductivity sensor 18 is provided on the wastewater path and configured to detect the conductivity in the wastewater path. The processor is configured to determine dirtiness information based on the detection results of the first conductivity sensor 17 and the second conductivity sensor 18, so as to control subsequent cleaning operations based on the dirtiness information. The subsequent cleaning operations may include, for example, cleaning ground by the cleaning device, cleaning, by the docking station, the cleaning cloth of the cleaning device. Exemplarily, the processor determines a first conductivity target value according to the first conductivity detection value, determines a second conductivity target value according to the second conductivity detection value, determines a ratio or an absolute value of a difference between the first conductivity target value and the second conductivity target value as a target dirtiness value, and determines the target dirtiness value as the dirtiness information.

Since the first conductivity sensor 17 is provided downstream of the water softener 11, the first conductivity sensor 17 can detect the conductivity of the softened clean water, thereby ensuring the detection accuracy of the conductivity in the clean water path, thereby ensuring the accuracy of the determined dirtiness information. Upon controlling the subsequent cleaning operations based on the dirtiness information, the cleaning effect can be significantly improved, thereby improving the user experience.

It can be understood that conductivity is a parameter used for measuring the conductivity of a water solution and is directly related to the number and types of ions dissolved in the water. Hard water contains more ions, such as calcium and magnesium. After the water is softened, these ions can be removed, resulting in a reduced content of ionized substances. Therefore, soft water will generally have a lower conductivity than hard water. For example, the conductivity of industrial softened water is around 1040 µs/cm. The conductivity of newly distilled water or ion-exchanged water is in the range of 0.5 to 2 µs/cm. As the concentration of dissolved solids in water increases, the conductivity increases accordingly.

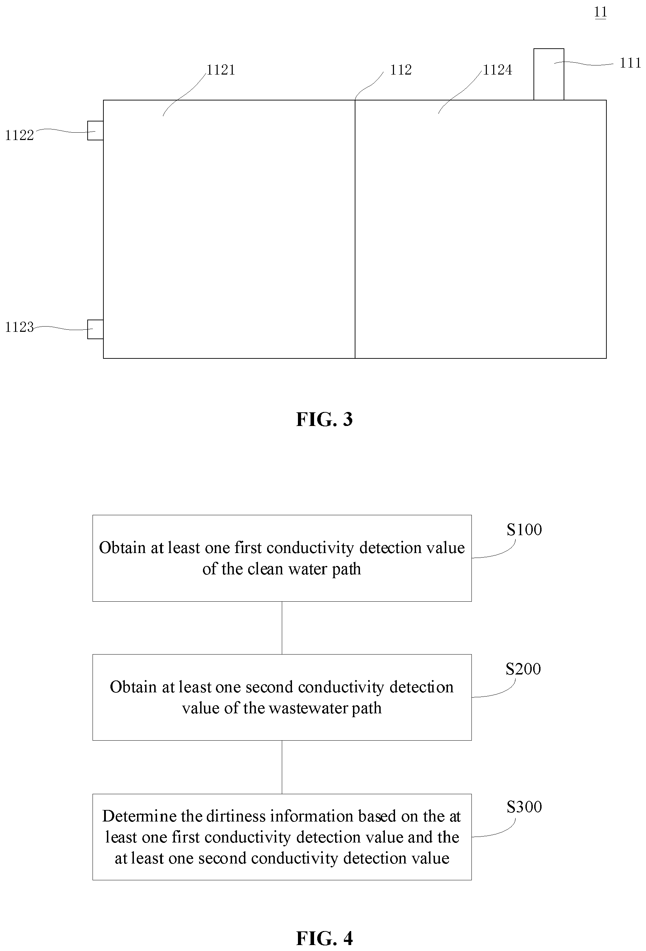

In some embodiments, as shown in FIG. 3, the water softener 11 includes a first housing 112. The first housing 112 is provided with a resin chamber 1121 and a salty water chamber 1124. The first housing 112 is provided with a water inlet 1122 and a water outlet 1123 that communicate with the resin chamber 1121, and the water inlet 1122 and the water outlet 1123 are connected to the clean water path. The clean water entering the clean water path first enters the resin chamber 1121 from the water inlet 1122, and then undergoes ion exchange with the resin in the resin chamber 1121, thereby achieving softening of the clean water. The softened clean water flows out from the water outlet 1123 of the resin chamber 1121 to be provided to the cleaning device 2. The salty water chamber 1124 and the resin chamber 1121 are connected through a water passage, and a solenoid valve is provided to control the opening and closing of the water passage. The salty water chamber 1124 is filled with sodium salt solution. When the adsorption capacity, for calcium and magnesium ions, of the resin in the resin chamber 1121 drops to a certain level, the solenoid valve is opened and, thus, the sodium salt solution in the salty water chamber 1124 flows to the resin chamber 1121, so as to replenish sodium ions to the resin in the resin chamber 1121, thereby realizing regeneration of the resin. The first housing 112 is also provided with a salt adding port 111 communicated with the salty water chamber 1124. When the concentration of the sodium salt solution in the salty water chamber 1124 drops to a certain level, salt can be added through the salt adding port 111 to the salty water chamber 1124, so as to increase the concentration of the sodium salt solution. Exemplarily, a float tank is provided in the salty water chamber 1124, a float is provided in the float tank, and a reed switch is provided on the outer wall of the first housing 112 corresponding to the position of the float tank. When the concentration of the sodium salt solution is greater than a preset concentration, the float is in a floating state. When the concentration of the sodium salt solution is less than or equal to the preset concentration, the float sinks. When a magnet in the float passes through the reed switch, a pulse signal can be detected by the reed switch which then sends out a prompt signal for prompting the user to add salt. The prompt signal may be, for example, lighting an indicator light, or emitting a sound as a reminder.

In some embodiments, while softening the clean water, the resin in the resin chamber 1121 can also be regenerated in the water softener 11, thereby ensuring the softening effect of the clean water and, thus, effectively improving the cleaning effect upon using the softened clean water.

As shown in FIG. 2, in some embodiments, the station body 1 further includes a clean water chamber 15 provided on the clean water path. The clean water chamber 15 is located upstream of the water softener 11. The clean water entering the clean water path first undergoes softening treatment through the water softener 11, and the softened clean water enters the clean water chamber 15 and is then provided to the cleaning device 2. By providing the clean water chamber 15, a certain amount of clean water can be stored, so as to improve the timeliness of water supply to the cleaning device 2 and avoid the problem of being unable to clean due to reasons such as water outage, thereby improving the user experience.

Continuing to refer to FIG. 2, in some embodiments, the clean water path includes a clean water main path 151 and a plurality of clean water branches connected to the clean water main path 151. The water softener 11 is provided on the clean water main path 151. The first conductivity sensor 17 is provided in the clean water main path 151. After the clean water in the clean water main path 151 is softened by the water softener 11, it flows to the clean water branches for cleaning. For example, a one-way valve 154 is provided on each clean water branch to prevent the clean water from flowing back. With this design, on the one hand, using softened clean water for cleaning can effectively improve the cleaning effect of using softened clean water for cleaning. On the other hand, allowing the first conductivity sensor 17 to detect the conductivity of the softened clean water can ensure the detection accuracy of the conductivity in the clean water path, thereby further ensuring the accuracy of determining the dirtiness information.

In some other embodiments, the first conductivity sensor 17 is provided in the clean water branch. For example, it can be provided in any clean water branch among the multiple clean water branches, or the first conductivity sensor 17 can be provided on each clean water branch. When the first conductivity sensor 17 is provided on each clean water branch, the processor may use the average value of the conductivity values detected by each first conductivity sensor 17 as the first conductivity target value. Alternatively, weight values may be set for each conductivity value detected by the first conductivity sensor 17, and then the weighted conductivity values are added to obtain the first conductivity target value. In this way, the accuracy of the first conductivity target value can be effectively improved, thereby improving the accuracy of the detection results of the dirtiness detection module. Accordingly, upon controlling the sweeping robot to clean based on the detection results, the cleaning effect of the sweeping robot can be effectively improved, thereby improving the user experience.

In yet some other embodiments, the first conductivity sensor 17 is provided in both the clean water main path 151 and at least one clean water branch. For example, the first conductivity sensor 17 can be respectively provided in the clean water main path 151 and in any one of the clean water branches. The first conductivity sensor 17 can also be provided in the clean water main path 151 and each of the clean water branches. The processor may use the average value of the conductivity values detected by each first conductivity sensor 17 as the first conductivity target value. Alternatively, weight values may be set for each conductivity value detected by the first conductivity sensor 17, and then the weighted conductivity values are added to obtain the first conductivity target value. In this way, the accuracy of the first conductivity target value can be further improved.

Continuing to refer to FIG. 2, in some embodiments, the station body 1 is provided with a device water injection port 12 for injecting water into the cleaning device 2. For example, the station body 1 is provided with a chamber for accommodating the cleaning device 2. The chamber has an opening for cleaning device 2 to enter and exit the chamber on one side wall of the chamber. The device water injection port 12 is provided at the side wall of the chamber, and the device water injection port 12 may be connected with the cleaning device 2 to achieve water injection into the cleaning device 2. The plurality of clean water branches include a first clean water branch 152. One end of the first clean water branch 152 is connected to the clean water main path 151, and the other end of the first clean water branch 152 is connected to the device water injection port 12. In this way, the water supply to the cleaning device 2 is facilitated, and the softened clean water is provided to the cleaning device 2 through the first clean water branch 152, so as to effectively improve the cleaning effect of the cleaning device 2 and also reduce the number of cleanings, thereby improving the cleaning efficiency of the cleaning device 2.

Continuing to refer to FIG. 2, in some embodiments, the station body 1 further includes a cleaning pool 14, and the cleaning pool 14 is configured to clean the cleaning cloth on the cleaning device 2. Exemplarily, the cleaning pool 14 is provided at the bottom of the chamber, and a cleaning assembly is provided in the cleaning pool 14. The cleaning assembly is configured to clean the cleaning cloth on the cleaning device 2. The cleaning cloth on the cleaning device 2 is arranged at the bottom of the cleaning device 2, and the ground can be cleaned by the cleaning cloth during the walking process of the cleaning device 2. When the cleaning device 2 enters the chamber, the cleaning cloth on the cleaning device 2 faces the cleaning pool 14 to facilitate the cleaning assembly to clean the cleaning cloth. For example, the cleaning assembly includes a roller brush and a driving member. The driving member drives the roller brush to rub and roll on the surface of the cleaning cloth, thereby cleaning the cleaning cloth. The plurality of clean water branches include a second clean water branch 153. One end of the second clean water branch 153 is connected to the clean water main path 151, and the other end of the second clean water branch 153 is connected to the cleaning pool 14. For example, a pump body 156 may be provided in the second clean water branch 153 to pump clean water to the clean water pool.

Adopting such an arrangement improves the convenience of supplying water to the cleaning pool 14 on the one hand. The softened clean water is provided to the cleaning pool 14 through the second clean water branch 153, thereby improving the cleaning effect of the cleaning cloth on the cleaning device 2. On the other hand, instead of manually cleaning the cleaning cloth, the convenience of using the cleaning device 2 is effectively improved, thereby further improving the user experience.

Continuing to refer to FIG. 2, in some embodiments, the plurality of clean water branches include the first clean water branch 152 and the second clean water branch 153. The first clean water branch 152 and the second clean water branch may be connected to the clean water main path 151 through a valve body 155. For example, the valve body 155 may be a three-way solenoid valve. The outlet end of the clean water main path 151 is connected to the water inlet of the valve body 155. The water inlet end of the first clean water branch 152 is connected with a first water outlet of the valve body 155, and the water inlet end of the second clean water branch 153 is connected with a second water outlet of the valve body 155. In this way, the connection between the clean water main path 151, the first clean water branch 152 and the second clean water branch 153 is facilitated, thereby effectively improving the assembly efficiency of the docking station.

Continuing to refer to FIG. 2, in some embodiments, the station body 1 further includes a cleaning liquid chamber 16 for storing cleaning liquid. The cleaning liquid chamber 16 is connected to the clean water path through a connecting pipe 161, and the connection position between the connecting pipe 161 and the clean water path is located downstream of the water softener 11. Exemplarily, the connecting pipe 161 may also be connected to the clean water path through a valve body 155, for example, connected to the clean water main path 151 of the clean water path. The clean water main path 151 includes a first pipe section and a second pipe section, and the water softener 11, the clean water chamber 15 and the first conductivity sensor 17 are all provided on the first pipe section. The water outlet end of the first pipe section is connected to a first water inlet of the valve body 155, and the water outlet end of the connecting pipe 161 is connected to a second water inlet of the valve body 155. The water inlet end of the second pipe section is connected to the water outlet of the valve body 155, and clean water mixed with cleaning liquid flows out from the water outlet of the second pipe section for cleaning. For example, the clean water mixed with cleaning liquid may be provided to the sweeping robot, and the clean water mixed with cleaning liquid can be used for cleaning the ground, thereby effectively improving the effect of cleaning the ground. It is also possible to provide the clean water mixed with cleaning liquid to the docking station, and use the clean water mixed with cleaning liquid to clean the cleaning cloth on the sweeping robot, thereby further effectively improving the cleaning effect of the cleaning cloth. In this way, when using the cleaning cloth to clean the ground again, the effect and efficiency of ground cleaning can be effectively improved, thereby improving the user experience.

When the connecting pipe 161 for transporting cleaning liquid is connected to the clean water path, the cleaning liquid may cause certain damage to the water softener 11 and thus affect the effect of softening the clean water. In view of this, the connection position between the connecting pipe 161 and the clean water path is located downstream of the water softener 11. The clean water is softened by the water softener before being mixed with the cleaning liquid, and the clean water mixed with the cleaning liquid flows out from the clean water path. With such arrangement, on the one hand, the cleaning liquid can be effectively prevented from causing damage to the water softener 11, thereby effectively improving the effect of the water softener 11 on softening clean water. On the other hand, softened clean water mixed with cleaning liquid can further improve the cleaning effect during cleaning.

For example, the cleaning liquid in the cleaning liquid chamber 16 can be pumped to the clean water path by providing a first pumping device 162 on the connecting pipe. The first pumping device 162 may be, for example, a peristaltic pump.

Continuing to refer to FIG. 2, in some embodiments, the station body 1 further includes a wastewater chamber 13 provided on the wastewater path. The wastewater chamber 13 is connected to the cleaning pool 14 in the station body 1 through a first wastewater pipe 132. The second conductivity sensor 18 is provided in the first wastewater pipe 132 to detect the conductivity of the wastewater in the cleaning pool 14. The station body 1 is provided with a wastewater outlet 131 for discharging wastewater. The wastewater outlet 131 may, for example, be connected to a sewer pipe in the user's home to discharge wastewater to the sewer pipe. The wastewater chamber 13 is connected to the wastewater outlet 131 through a second wastewater pipe 133. For example, a second pumping device 134 may be provided on the second wastewater pipe 133 to pump wastewater in the wastewater chamber 13 to the wastewater outlet 131. The second pumping device 134 may, for example, be a water pump. Under the pumping of the water pump, the wastewater in the cleaning pool 14 enters the wastewater chamber 13 through the first wastewater pipe 132, and then flows out from the wastewater outlet 131 through the second wastewater pipe 133. The second pumping device 134 may also, for example, be a vacuum pump. The vacuum pump extracts air in the wastewater chamber 13 to form a negative pressure in the wastewater chamber 13. Under the action of the negative pressure, the wastewater flows into the wastewater chamber 13 through the first wastewater pipe 132, and then flows out from the wastewater outlet 131 through the second wastewater pipe 133. Such arrangement realizes the automatic treatment of wastewater in the station body 1, replacing the user's manual treatment of wastewater, thereby effectively improving the usage convenience of the docking station, and further improving the user experience.

In some other embodiments, the second conductivity sensor 18 is provided in the second wastewater pipe 133, so that the conductivity of the wastewater in the cleaning pool 14 can also be detected.

In some other embodiments, the first wastewater pipe 132 and the second wastewater pipe 133 are both provided with second conductivity sensors 18, and the processor can calculate an average value of the conductivity values detected by respective second conductivity sensors 18 as the second conductivity target value. Alternatively, weight values may be set for each conductivity value detected by the second conductivity sensor 18, and then the weighted conductivity values are added to obtain the second conductivity target value. In this way, the accuracy of the second conductivity target value can be effectively improved, thereby improving the accuracy of the detection results of the dirtiness detection module. Accordingly, upon controlling the sweeping robot to clean based on the detection results, the cleaning effect of the sweeping robot can be effectively improved, thereby improving the user experience.

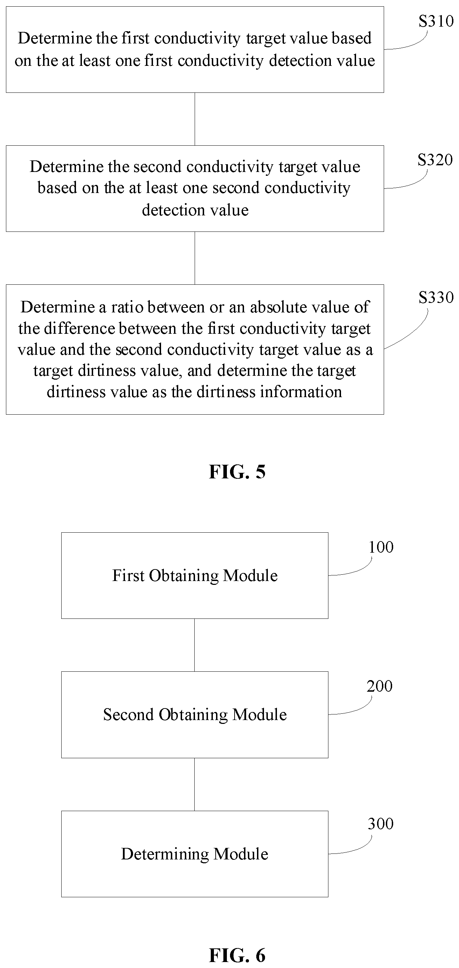

Some embodiments of this invention provide a method for controlling the docking station as described above. As shown in FIG. 5, the method for controlling the docking station includes the following steps.

In S100, at least one first conductivity detection value of the clean water path is obtained.

In this step, as shown in FIG. 2, the first conductivity sensor 17 can be provided in the clean water path, and the first conductivity sensor 17 is provided downstream of the water softener 11 on the docking station, so that the first conductivity sensor 17 is able to detect the conductivity of the softened clean water in the clean water path, thereby obtaining the first conductivity detection value. In this way, the detection accuracy of conductivity in the clean water path can be ensured. Exemplarily, the clean water path includes the clean water main path 151 as well as the first clean water branch 152 and the second clean water branch 153 connected to the clean water main path 151. The first clean water branch 152 is configured to provide clean water for the clean device 2, and the second clean water branch 153 is configured to provide clean water for the cleaning pool 14.

The first conductivity sensor 17 may be provided in any one of the clean water main path 151, the first clean water branch 152 and the second clean water branch 153, so as to obtain one first conductivity detection value. Alternatively, the first conductivity sensor 17 may be provided in the first clean water branch 152 and the second clean water branch 153 respectively, so as to obtain two first conductivity detection values Alternatively, the first conductivity sensor 17 may also be provided in the clean water main path 151 and either one of the first clean water branch 152 and the second clean water branch 153, so as to obtain two first conductivity detection values. Alternatively, the first conductivity sensor 17 may be provided on each one of the clean water main path 151, the first clean water branch 152 and the second clean water branch 153, so as to obtain three first conductivity detection values.

In S200, at least one second conductivity detection value of the wastewater path is obtained.

In this step, as shown in FIG. 2, the second conductivity sensor 18 may be provided in the wastewater path, and the second conductivity sensor 18 is able to detect the conductivity of the wastewater in the wastewater path, thereby obtaining the second conductivity detection value. Exemplarily, the wastewater path includes the first wastewater pipe 132 and the second wastewater pipe 133. The first wastewater pipe 132 connects the wastewater chamber 13 and the cleaning pool 14, and the second wastewater pipe 133 connects the wastewater chamber 13 and the wastewater outlet 131. The second conductivity sensor 18 may be provided in the first wastewater pipe 132 or the second wastewater pipe 133 to obtain one second conductivity detection value. The second conductivity sensor 18 may also be provided in both the first wastewater pipe 132 and the second wastewater pipe 133, so as to obtain two second conductivity detection values.

In S300, the dirtiness information is determined based on the at least one first conductivity detection value and the at least one second conductivity detection value.

In some embodiments, the dirtiness information, determined based on the at least one first conductivity detection value and the at least one second conductivity detection value, can effectively improve the accuracy of the dirtiness information. During subsequent cleaning operations controlled based on the dirtiness information, the cleaning effect can be significantly improved, thereby improving the user experience.

In some embodiments, as shown in FIG. 5, said determining the dirtiness information based on the at least one first conductivity detection value and the at least one second conductivity detection value in step S300 specifically includes the following steps.

In S310, the first conductivity target value is determined based on the at least one first conductivity detection value.

In this step, when there is only one first conductivity detection value, the first conductivity detection value is used as the first conductivity target value. When there are multiple first conductivity detection values, the average of the first conductivity detection values may be used as the first conductivity target value. Alternatively, weight values may be set for each first conductivity detection value, and then the weighted first conductivity detection values are added to obtain the first conductivity target value. For example, there are three first conductivity detection values, including a first conductivity detection value on the clean water main path, a first conductivity detection value on the first clean water branch, and a first conductivity detection value on the second clean water branch. Accordingly, the first conductivity target value = the first conductivity detection value on the clean water main path × 0.4 + the first conductivity detection value on the first clean water branch × 0.3 + the first conductivity detection value on the second clean water branch × 0.3.

In S320, the second conductivity target value is determined based on the at least one second conductivity detection value.

In this step, when there is only one second conductivity detection value, the second conductivity detection value is used as the second conductivity target value. When there are multiple second conductivity detection values, the average value of respective second conductivity sensors 18 may be used as the second conductivity target value, or the weighted average value of respective second conductivity sensors 18 may be used as the second conductivity target value.

In S330, a ratio between or an absolute value of the difference between the first conductivity target value and the second conductivity target value is used as a target dirtiness value, and the target dirtiness value is determined as the dirtiness information.

In some embodiments, the first conductivity target value determined based on at least one first conductivity detection value can further improve the accuracy of the first conductivity target value. Correspondingly, the second conductivity target value determined based on at least one second conductivity detection value can improve the accuracy of the second conductivity target value. Furthermore, the dirtiness information determined based on the ratio between or the absolute value of the difference between the first conductivity target value and the second conductivity target value can effectively improve the accuracy of the dirtiness information, thereby improving the accuracy of the detection results of the dirtiness detection module. Furthermore, upon controlling the sweeping robot to clean based on the detection results, the cleaning effect of the sweeping robot can be effectively improved, thereby improving the user experience.

In some embodiments, after determining the dirtiness information, the method for controlling the docking station further includes:
controlling the docking station to send out a dirtiness information prompt.

In some embodiments, when the dirtiness information is determined, the docking station is controlled to send out the dirtiness information prompt, for example, by voice broadcast or by lighting an indicator light, so that the user can perform subsequent operations according to the prompt. For example, when the indicator light is green, the user is prompted to end the operation of the cleaning device; when the indicator light flashes red, the user is prompted to rewash the cleaning cloth on the cleaning device.

In some embodiments, the method for controlling the docking station further includes:
determine a cleaning strategy based on the dirtiness information.

In some embodiments, the cleaning strategy may be, for example, a strategy for cleaning the ground with the cleaning device 2, or a strategy for the docking station to clean the cleaning cloth on the cleaning device 2. Determining the cleaning strategy based on the dirtiness information enables the implementation of different cleaning strategies based on different dirtiness conditions. In this way, on the one hand, it can further improve the cleaning effect and avoid incomplete cleaning due to excessive dirt on the ground. On the other hand, it can also effectively save energy and avoid the waste of water resources and electricity caused by excessive cleaning.

In some embodiments, the cleaning strategy includes whether to rewash the cleaning cloth and/or the number of rewashes of the cleaning cloth and/or whether to re-mop and/or an area to be re-mopped. In this way, the cleaning effect on the cleaning cloth and the ground can be effectively improved, thereby further improving the user experience.

In some embodiments, the cleaning strategy is determined based on the dirtiness information in the following manner.

Based on the target dirtiness value and first preset configuration information, it is determined whether to rewash the cleaning cloth and the number of rewashes of the cleaning cloth. The first preset configuration information is indicative of a correspondence between dirtiness value ranges and whether to rewash the cleaning cloth and the number of rewashes. For example, the absolute value of the difference between the first conductivity target value and the second conductivity target value is taken as the target dirtiness value. When the target dirtiness value is less than or equal to 300 µs/m, there is no need to clean the cleaning cloth. When the target dirtiness value is greater than 300 µs/m and less than or equal to 400 µs/m, the cleaning cloth is rewashed once. When the target dirtiness value is greater than 400 µs/m and less than or equal to 500 µs/m, the cleaning cloth is rewashed twice. Accordingly, the greater the dirtiness value, the greater the number of rewashes.

In this way, the intelligent judgment of rewashing the cleaning cloth can be realized, which can not only improve the cleanliness of the cleaning cloth, but also effectively save energy.

In some embodiments, the cleaning strategy may also be determined based on the dirtiness information in the following manner.

Based on the target dirtiness value and second preset configuration information, it is determined whether to re-mop and the area to be re-mopped. The second preset configuration information is indicative of a correspondence between dirtiness value ranges and whether to re-mop and percentages of the area to be re-mopped to a previously mopped area. For example, the absolute value of the difference between the first conductivity target value and the second conductivity target value is used as the target dirtiness value. When the target dirtiness value is less than or equal to 300 µs/m, there is no need to re-mop. When the target dirtiness value is greater than 300 µs/m and less than or equal to 400 µs/m, the ground is to be re-mopped, and the area to be re-mopped may account for 20% of the previously mopped area. When the target dirtiness value is greater than 400 µs/m and less than or equal to 500 µs/m, the ground is to be re-mopped, and the area to be re-mopped may account for 40% of the previously mopped area. The greater the dirtiness value, the greater the corresponding percentage. It should be noted that the percentage of the area to be re-mopped to the previously mopped area is the percentage of, along the path from the beginning to the end of the previous mopping, the area to be re-mopped from back to front accounts for the previously mopped area. For example, when referring to that the area to be re-mopped accounts for 20% of the previously mopped area, the 20% area is the last 20% of the previously mopped area.

In this way, intelligent judgment of the ground mopping area can be realized, which can not only improve the ground cleaning effect, but also save energy.

In some embodiments, the method for controlling the docking station further includes a following step:
determining a cumulative mopping time of the cleaning cloth since a previous cleaning.

In this step, when the cleaning cloth is cleaned, the cleaning device 2 drives out of the docking station, and the timing starts. The timing ends until the cleaning device 2 returns to the docking station again, thereby determining the cumulative mopping time. After the cleaning device 2 returns to the docking station, the cleaning cloth on the cleaning device 2 is cleaned again. For example, the longer the cumulative mopping time, the higher the degree of dirtiness of the cleaning cloth; and the shorter the cumulative mopping time, the lower the degree of dirtiness of the cleaning cloth.

In some embodiments, the cleaning strategy may also be determined based on the dirtiness information in the following manner.

Based on the target dirtiness value and third preset configuration information, it is determined whether to re-mop and the area to be re-mopped. The third preset configuration information is indicative of a correspondence between dirtiness value ranges, time length ranges and whether to re-mop, percentages of the area to be re-mopped to the previously mopped area.

Within the same time range, the greater the dirtiness value, the greater the corresponding percentage. For example, the absolute value of the difference between the first conductivity target value and the second conductivity target value is used as the target dirtiness value. When the cumulative time range of the cleaning cloth after the previous cleaning is the same as a time range in the third preset configuration information, and when the target dirtiness value is less than or equal to 300 µs/m, there is no need to re-mop the ground. When the target dirtiness value is greater than 300 µs/m and less than or equal to 400 µs/m, the ground is to be re-mopped, and the area to be re-mopped may account for 20% of the previously mopped area. When the target dirtiness value is greater than 400 µs/m and less than or equal to 500 µs/m, the ground is to be re-mopped, and the area to be re-mopped may account account for 40% of the previously mopped area. Accordingly, within the same time range, the greater the dirtiness value, the greater the dirtiness degree of the cleaning cloth, thereby indicating the greater dirtiness degree of the ground. Therefore, the area that needs to be re-mopped accounts for the greater percentage of the previously mopped area.

Within the same dirtiness value range, the longer the time length, the smaller the corresponding percentage. For example, the absolute value of the difference between the first conductivity target value and the second conductivity target value is used as the target dirtiness value. When the target dirtiness value range is the same as a dirtiness value range in the third preset configuration information, and when the cumulative mopping time of the cleaning cloth after the previous cleaning is greater than or equal to 10 minutes, there is no need to re-mop the ground. When the cumulative mopping time of the cleaning cloth after the previous cleaning is greater than or equal to 8 minutes and less than 10 minutes, the ground is to be re-mopped, and the area to be re-mopped may account for 20% of the previously mopped area. When the cumulative mopping time of the cleaning cloth after the previous cleaning is greater than or equal to 6 minutes and less than 8 minutes, the ground is to be re-mopped, and the area to be re-mopped may account for 40% of the previously mopped area. Accordingly, within the same dirtiness value range, the longer the time length, the lower the dirtiness degree of the ground, and thus the area that needs to be re-mopped accounts for the smaller percentage of the previously mopped area.

In this way, intelligent judgment of the ground mopping area can also be realized, which can not only improve the ground cleaning effect, but also save energy.

Some embodiments of this invention provide an apparatus for controlling the docking station as described above, which is configured to implement the method for controlling the docking station as described above. As shown in FIG. 6, the apparatus for controlling the docking station includes a first obtaining module 100, a second obtaining module 200 and a determining module 300. During the implementation of the above method, followings may be referred to.

The first obtaining module 100 is configured to obtain at least one first conductivity detection value of the clean water path.

The second obtaining module 200 is configured to obtain at least one second conductivity detection value of the wastewater path.

The determining module 300 is configured to determine the dirtiness information based on the at least one first conductivity detection value and the at least one second conductivity detection value.

In some embodiments, the determining module 300 is specifically configured to determine the first conductivity target value based on at least one first conductivity detection value; determine the second conductivity target value based on at least one second conductivity detection value; determine the ratio or the absolute value of difference between the first conductivity target value and the second conductivity target value as the target dirtiness value, and determine the target dirtiness value as the dirtiness information.

Some embodiments of this invention provide a cleaning equipment. The cleaning equipment includes a docking station and a cleaning device matching with each other. The cleaning device may be, for example, a sweeping robot.

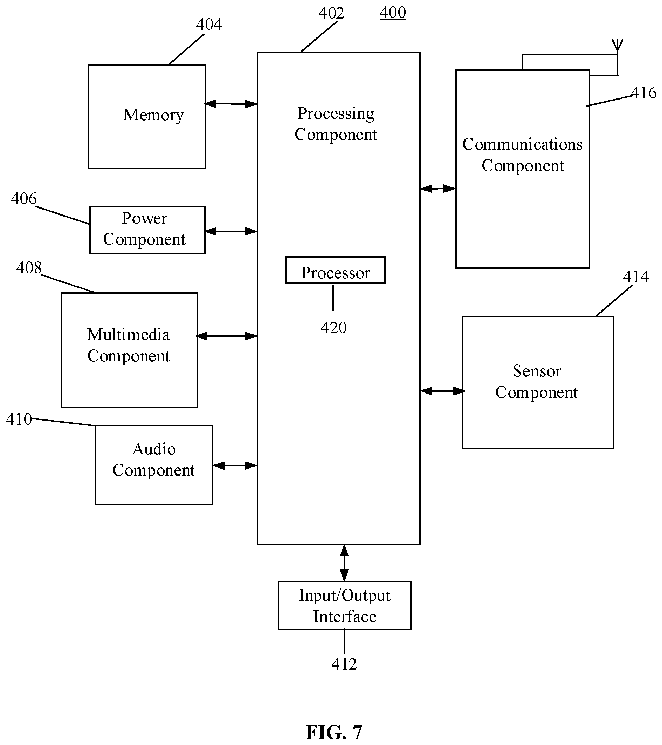

As shown in FIG. 7, the cleaning equipment 400 may also include one or more of the following components: a processing component 402, a memory 404, a power component 406, a multimedia component 408, an audio component 410, and an input/output (I/O) interface 412, a sensor component 414, and communication component 416.

The processing component 402 generally controls the overall operation of the cleaning equipment 400, such as operations associated with water supplying, dirt discharging, data communication, cleaning and the like. The processing component 402 may include one or more processors 420 to execute instructions to perform all or some of the steps of the methods described above. Additionally, the processing component 402 may include one or more modules that facilitate interaction between the processing component 402 and other components. For example, the processing component 402 may include a multimedia module to facilitate interaction between the multimedia component 408 and the processing component 402.

The memory 404 is configured to store various types of data to support operation at the cleaning equipment 400. Examples of such data include instructions for any application or method operating on the cleaning equipment 400, such as a driving route of the sweeping robot. The memory 404 may be implemented by any type of volatile or non-volatile storage device or combination thereof, such as static random access memory (SRAM), electrically erasable programmable read only memory (EEPROM), erasable programmable read only memory (EPROM), programmable read only memory (PROM), read only memory (ROM), magnetic memory, flash memory, magnetic disk or optical disk.

The power component 406 provides power to various components of the cleaning equipment 400. The power components 406 may include a power management system, one or more power sources, and other components associated with generating, managing, and distributing power to the cleaning equipment 400.

The multimedia component 408 includes a screen that provides an output interface between the cleaning equipment 400 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touch, swipe, and gestures on the touch panel. The touch sensor may not only sense the boundaries of a touch or swipe action, but also detect the duration and pressure associated with the touch or swipe action.

The audio component 410 is configured to output and/or input audio signals. For example, the audio component 410 includes a microphone (MIC) that is configured to receive external audio signals when the cleaning equipment 400 is in operating modes, such as cleaning mode and water supplying mode. The received audio signal may be further stored in the memory 404 or transmitted via the communication component 416. In some embodiments, the audio component 410 also includes a speaker for outputting audio signals.

The I/O interface 412 provides an interface between the processing component 402 and a peripheral interface module, which may be a keyboard, a click wheel, a button, or the like. These buttons may include, but are not limited to: home button, volume buttons, start button, and lock button.

The sensor assembly 414 includes one or more sensors for providing status assessments of various aspects of the cleaning equipment 400. For example, the sensor assembly 414 can detect the open/closed state of the cleaning equipment 400. The sensor assembly 414 may include a proximity sensor configured to detect the presence of nearby objects in the absence of any physical contact. The sensor assembly 414 may also include a light sensor, such as a CMOS or CCD image sensor, for use during the cleaning. In some embodiments, the sensor assembly 414 may also include an acceleration sensor, a gyroscope sensor, a magnetic sensor, a pressure sensor, or a temperature sensor.

The communication component 416 is configured to facilitate wired or wireless communication between the cleaning equipment 400 and other devices. The cleaning equipment 400 may access wireless networks based on communication standards, such as WiFi, 2G, 3G, 4G, 5G or a combination thereof. In some embodiments, the communication component 416 receives broadcast signals or broadcast related information from an external broadcast management system via a broadcast channel. In some embodiments, the communication component 416 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In some embodiments, the cleaning equipment 400 may be implemented by one or more application specific integrated circuits (ASICs), digital signal processors (DSPs), digital signal processing devices (DSPDs), programmable logic devices (PLDs), field programmable gate array (FPGA), controller, microcontroller, microprocessor or other electronic component, which are configured to perform the forgoing methods.

In some embodiments, there is also provided a non-transitory computer-readable storage medium, such as the memory 404 including instructions executable by the processor 420 of the cleaning equipment 400 to perform the method described above. For example, the non-transitory computer-readable storage medium may be ROM, random access memory (RAM), CD-ROM, magnetic tape, floppy disk, optical data storage device, and the like. When the instructions in the storage medium are executed by a processor of a terminal, the terminal is enabled to perform the method shown in the forgoing embodiments.

According to a first aspect of this invention, a docking station is provided and include: a station body, provided with a clean water path and a wastewater path, where the clean water path is configured to provide clean water to a cleaning device, the wastewater path is configured to discharge wastewater in the station body, and a water softener is provided on the clean water path; and a dirtiness detection module, including a first conductivity sensor, a second conductivity sensor and a processor, where the first conductivity sensor is provided in the clean water path and located downstream of the water softener, the second conductivity sensor is provided in the wastewater path, and the processor is configured to determine dirtiness information based on detection results of the first conductivity sensor and the second conductivity sensor.

In some embodiments of this invention, the station body further includes a clean water chamber provided on the clean water path, and the clean water chamber is located upstream of the water softener.

In some embodiments of this invention, the clean water path includes a clean water main path and a plurality of clean water branches connected to the clean water main path, the water softener is provided on the clean water main path, and the first conductivity sensor is provided on the clean water main path and/or the clean water branch.

In some embodiments of this invention, the station body is provided with a device water injection port configured to inject water into the cleaning device, the plurality of clean water branches includes a first clean water branch, one end of the first clean water branch is connected to the clean water main path, and another end of the first clean water branch is connected to the device water injection port; and/or, the station body further includes a cleaning pool, the cleaning pool is configured to clean a cleaning cloth on the cleaning device, the plurality of clean water branches includes a second clean water branch, one end of the second clean water branch is connected to the clean water main path, and another end of the second clean water branch is connected to the cleaning pool.

In some embodiments of this invention, the station body further includes a cleaning liquid chamber configured to store cleaning liquid, the cleaning liquid chamber is connected to the clean water path through a connecting pipe, and a connection position between the connecting pipe and the clean water path is located downstream of the water softener.

In some embodiments of this invention, the station body further includes a wastewater chamber provided on the wastewater path, and the wastewater chamber is connected to a cleaning pool within the station body through a first wastewater pipe; the station body is provided with a wastewater outlet configured to discharge the wastewater, and the wastewater chamber is connected to the wastewater outlet through a second wastewater pipe; the second conductivity sensor is provided in the first wastewater pipe and/or the second wastewater pipe.

According to a second aspect of this invention, a method for controlling the docking station according to the first aspect is provided and includes: obtaining at least one first conductivity detection value of the clean water path; obtaining at least one second conductivity detection value of the wastewater path; and determining the dirtiness information based on the at least one first conductivity detection value and the at least one second conductivity detection value.

In some embodiments of this invention, said determining the dirtiness information based on the at least one first conductivity detection value and the at least one second conductivity detection value includes: determining a first conductivity target value according to the at least one first conductivity detection value; determining a second conductivity target value according to the at least one second conductivity detection value; and determining a ratio or an absolute value of a difference between the first conductivity target value and the second conductivity target value as a target dirtiness value, and determining the target dirtiness value as the dirtiness information.

In some embodiments of this invention, the method for controlling the docking station further includes: determining a cleaning strategy based on the dirtiness information.

In some embodiments of this invention, the cleaning strategy includes whether to rewash a cleaning cloth and/or a number of rewashes of the cleaning cloth and/or whether to re-mop and/or an area to be re-mopped.

In some embodiments of this invention, said determining the cleaning strategy based on the dirtiness information includes: determining whether to rewash the cleaning cloth and the number of rewashes of the cleaning cloth based on the target dirtiness value and first preset configuration information, where the first preset configuration information is indicative of a correspondence between dirtiness value ranges and whether to rewash the cleaning cloth and the number of rewashes, a larger dirtiness value corresponding to a greater number of rewashes.

In some embodiments of this invention, said determining the cleaning strategy based on the dirtiness information includes: determining whether to re-mop and the area to be re-mopped based on the target dirtiness value and second preset configuration information, where the second preset configuration information is indicative of a correspondence between dirtiness value ranges and whether to re-mop and percentages of the area to be re-mopped to a previously mopped area, a larger dirtiness value corresponding to a greater percentage.

In some embodiments of this invention, the method for controlling the docking station further includes: determining a cumulative mopping time of the cleaning cloth since a previous cleaning; said determining the cleaning strategy based on the dirtiness information includes: determining whether to re-mop and the area to be re-mopped based on the target dirtiness value and third preset configuration information, where the third preset configuration information is indicative of a correspondence between dirtiness value ranges, time length ranges and whether to re-mop, percentages of the area to be re-mopped to a previously mopped area, a larger dirtiness value under a same time length range corresponding to a greater percentage, and a larger time length under a same dirtiness value range corresponding to a smaller percentage.

According to a third aspect of this invention, an apparatus for controlling the docking station according to the first aspect is provided and includes: a first obtaining module, configured to obtain at least one first conductivity detection value of the clean water path; a second obtaining module, configured to obtain at least one second conductivity detection value of the wastewater path; and a determining module, configured to determine the dirtiness information based on the at least one first conductivity detection value and the at least one second conductivity detection value.

According to a fourth aspect of this invention, a non-transitory computer-readable storage medium is provided, where instructions in the storage medium, upon being executed by a processor of a terminal, cause the terminal to implement the method according to the second aspect.

The technical solutions according to some embodiments of this invention may achieve the following beneficial effects.

The docking station according to this invention is provided with a water softener on the clean water path to soften the clean water in the clean water path, thereby improving the cleaning effect by using softened clean water. The dirtiness detection module includes a first conductivity sensor and a second conductivity sensor, where the first conductivity sensor is able to detect the conductivity in the clean water path and the second conductivity sensor is able to detect the conductivity in the wastewater path. Accordingly, the processor of the dirtiness detection module is able to determine the dirtiness information based on the conductivity in the clean water path and the conductivity in the wastewater path, so as to control subsequent cleaning operations based on the dirtiness information. Since the first conductivity sensor is located downstream of the water softener, the detection accuracy of conductivity in the clean water path can be ensured, thereby ensuring the accuracy of the determined dirtiness information.

Other embodiments of this invention will readily occur to those skilled in the art upon consideration of the specification and practice of the invention disclosed herein. The specification and examples are to be regarded as exemplary only, with the true scope of the invention being indicated by the following claims.

It is to be understood that this invention is not limited to the precise structures described above and illustrated in the accompanying drawings. The scope of this invention is limited only by the appended claims.

## Claims

1. A docking station, comprising:
a station body (1), provided with a clean water path and a wastewater path, wherein the clean water path is configured to provide clean water to a cleaning device (2), the wastewater path is configured to discharge wastewater in the station body (1), **characterized by** a water softener (11) provided on the clean water path; and
a first conductivity sensor (17), a second conductivity sensor (18) and a processor, wherein the first conductivity sensor is provided in the clean water path and located downstream of the water softener (11) , the second conductivity sensor is provided in the wastewater path, and the processor is configured to determine dirtiness information based on detection results of the first conductivity sensor and the second conductivity sensor.

2. The docking station according to claim 1, wherein the station body (1) further comprises a clean water chamber (15) provided on the clean water path, and the clean water chamber (15) is located upstream of the water softener (11).

3. The docking station according to claim 1 or 2, wherein the clean water path comprises a clean water main path and a plurality of clean water branches connected to the clean water main path, the water softener (11) is provided on the clean water main path, and the first conductivity sensor is provided on the clean water main path and/or the clean water branch.

4. The docking station according to claim 3, wherein the station body (1) is provided with a water injection port configured to inject water into the cleaning device (2), the plurality of clean water branches comprises a first clean water branch, one end of the first clean water branch is connected to the clean water main path, and another end of the first clean water branch is connected to the water injection port; and/or,
the station body (1) further comprises a cleaning pool, the cleaning pool is configured to clean a cleaning cloth on the cleaning device (2), the plurality of clean water branches comprises a second clean water branch, one end of the second clean water branch is connected to the clean water main path, and another end of the second clean water branch is connected to the cleaning pool.

5. The docking station according to any one of the preceding claims, wherein the station body (1) further comprises a cleaning liquid chamber configured to store cleaning liquid, the cleaning liquid chamber is connected to the clean water path through a connecting pipe, and a connection position between the connecting pipe and the clean water path is located downstream of the water softener (11).

6. The docking station according to any one of the preceding claims, wherein the station body (1) further comprises a wastewater chamber provided on the wastewater path, and the wastewater chamber is connected to a cleaning pool within the station body (1) through a first wastewater pipe;
the station body (1) is provided with a wastewater outlet configured to discharge the wastewater, and the wastewater chamber is connected to the wastewater outlet through a second wastewater pipe;
the second conductivity sensor is provided in the first wastewater pipe and/or the second wastewater pipe.

7. A method for controlling the docking station according to any one of the preceding claims, comprising:
obtaining (S100) at least one first conductivity detection value of the clean water path;
obtaining (S200) at least one second conductivity detection value of the wastewater path; and
determining (S300) the dirtiness information based on the at least one first conductivity detection value and the at least one second conductivity detection value.

8. The method according to claim 7, wherein said determining (S300) the dirtiness information based on the at least one first conductivity detection value and the at least one second conductivity detection value comprises:
determining a first conductivity target value according to the at least one first conductivity detection value;
determining a second conductivity target value according to the at least one second conductivity detection value; and
determining a ratio or an absolute value of a difference between the first conductivity target value and the second conductivity target value as a target dirtiness value, and determining the target dirtiness value as the dirtiness information.

9. The method according to claim 7 or 8, further comprising:
determining a cleaning strategy based on the dirtiness information.

10. The method according to claim 9, wherein the cleaning strategy comprises whether to rewash a cleaning cloth and/or a number of rewashes of the cleaning cloth and/or whether to re-mop and/or an area to be re-mopped.

11. The method according to claim 10, wherein said determining (S300) the cleaning strategy based on the dirtiness information comprises:
determining whether to rewash the cleaning cloth and the number of rewashes of the cleaning cloth based on the target dirtiness value and first preset configuration information, wherein the first preset configuration information is indicative of a correspondence between dirtiness value ranges and whether to rewash the cleaning cloth and the number of rewashes, a larger dirtiness value corresponding to a greater number of rewashes.

12. The method according to claim 10 or 11, wherein said (S300) determining the cleaning strategy based on the dirtiness information comprises:
determining whether to re-mop and the area to be re-mopped based on the target dirtiness value and second preset configuration information, wherein the second preset configuration information is indicative of a correspondence between dirtiness value ranges and whether to re-mop and percentages of the area to be re-mopped to a previously mopped area, a larger dirtiness value corresponding to a greater percentage.

13. The method according to any one of claims 10 to 12, further comprising: determining a cumulative mopping time of the cleaning cloth since a previous cleaning;
said determining the cleaning strategy based on the dirtiness information comprises:
determining whether to re-mop and the area to be re-mopped based on the target dirtiness value and third preset configuration information, wherein the third preset configuration information is indicative of a correspondence between dirtiness value ranges, time length ranges and whether to re-mop, percentages of the area to be re-mopped to a previously mopped area, a larger dirtiness value under a same time length range corresponding to a greater percentage, and a larger time length under a same dirtiness value range corresponding to a smaller percentage.

14. An apparatus for controlling the docking station according to any one of claims 1 to 6, comprising:
a first obtaining module (100), configured to obtain at least one first conductivity detection value of the clean water path;
a second obtaining module (200), configured to obtain at least one second conductivity detection value of the wastewater path; and
a determining module (300), configured to determine the dirtiness information based on the at least one first conductivity detection value and the at least one second conductivity detection value.

15. A non-transitory computer-readable storage medium, wherein instructions in the storage medium, upon being executed by a processor of a terminal, cause the terminal to implement the method according to any one of claims 7 to 13.

## Patentansprüche

1. Dockingstation, umfassend:
einen Stationskörper (1), der mit einer Frischwasserleitung und einer Abwasserleitung versehen ist, wobei die Frischwasserleitung dazu eingerichtet ist, einem Reinigungsgerät (2) Frischwasser bereitzustellen, die Abwasserleitung dazu eingerichtet ist, Abwasser in dem Stationskörper (1) abzuleiten,
**gekennzeichnet durch** einen Wasserenthärter (11), der an der Frischwasserleitung vorgesehen ist; und
einen ersten Leitfähigkeitssensor (17), einen zweiten Leitfähigkeitssensor (18) und einen Prozessor, wobei der erste Leitfähigkeitssensor in der Frischwasserleitung vorgesehen und stromabwärts des Wasserenthärters (11) angeordnet ist, der zweite Leitfähigkeitssensor in der Abwasserleitung vorgesehen ist und der Prozessor dazu eingerichtet ist, Verschmutzungsgradinformationen auf der Grundlage von Detektionsergebnissen des ersten Leitfähigkeitssensors und des zweiten Leitfähigkeitssensors zu bestimmen.

2. Dockingstation nach Anspruch 1, wobei der Stationskörper (1) ferner eine an der Frischwasserleitung vorgesehene Frischwasserkammer (15) umfasst und die Frischwasserkammer (15) stromaufwärts des Wasserenthärters (11) angeordnet ist.

3. Dockingstation nach Anspruch 1 oder 2, wobei die Frischwasserleitung eine Frischwasser-Hauptleitung und mehrere an die Frischwasser-Hauptleitung angeschlossene Frischwasser-Zweigleitungen umfasst, der Wasserenthärter (11) an der Frischwasser-Hauptleitung vorgesehen ist und der erste Leitfähigkeitssensor an der Frischwasser-Hauptleitung und/oder der Frischwasser-Zweigleitung vorgesehen ist.

4. Dockingstation nach Anspruch 3, wobei der Stationskörper (1) mit einer Wassereinlassöffnung versehen ist, die dazu eingerichtet ist, Wasser in das Reinigungsgerät (2) einzuleiten, die mehreren Frischwasser-Zweigleitungen eine erste Frischwasser-Zweigleitung umfassen, ein Ende der ersten Frischwasser-Zweigleitung mit der Frischwasser-Hauptleitung verbunden ist und ein anderes Ende der ersten Frischwasser-Zweigleitung mit der Wassereinlassöffnung verbunden ist; und/oder
der Stationskörper (1) ferner ein Reinigungsbecken umfasst, wobei das Reinigungsbecken dazu eingerichtet ist, ein Reinigungstuch an dem Reinigungsgerät (2) zu reinigen, die mehreren Frischwasser-Zweigleitungen eine zweite Frischwasser-Zweigleitung umfassen, ein Ende der zweiten Frischwasser-Zweigleitung mit der Frischwasser-Hauptleitung verbunden ist und ein anderes Ende der zweiten Frischwasser-Zweigleitung mit dem Reinigungsbecken verbunden ist.

5. Dockingstation nach einem der vorhergehenden Ansprüche, wobei der Stationskörper (1) ferner eine Reinigungsflüssigkeitskammer umfasst, die dazu eingerichtet ist, Reinigungsflüssigkeit zu speichern, die Reinigungsflüssigkeitskammer über ein Verbindungsrohr mit der Frischwasserleitung verbunden ist und eine Verbindungsstelle zwischen dem Verbindungsrohr und der Frischwasserleitung stromabwärts des Wasserenthärters (11) angeordnet ist.

6. Dockingstation nach einem der vorhergehenden Ansprüche, wobei der Stationskörper (1) ferner eine an der Abwasserleitung vorgesehene Abwasserkammer umfasst und die Abwasserkammer über ein erstes Abwasserrohr mit einem Reinigungsbecken in dem Stationskörper (1) verbunden ist;
der Stationskörper (1) mit einem Abwasserauslass versehen ist, der dazu eingerichtet ist, das Abwasser abzuleiten, und die Abwasserkammer über ein zweites Abwasserrohr mit dem Abwasserauslass verbunden ist;
der zweite Leitfähigkeitssensor in dem ersten Abwasserrohr und/oder dem zweiten Abwasserrohr vorgesehen ist.

7. Verfahren zum Steuern der Dockingstation nach einem der vorhergehenden Ansprüche, umfassend:
Ermitteln (S100) mindestens eines ersten Leitfähigkeitsmesswerts der Frischwasserleitung;
Ermitteln (S200) mindestens eines zweiten Leitfähigkeitsmesswerts der Abwasserleitung; und
Bestimmen (S300) der Verschmutzungsgradinformationen auf der Grundlage des mindestens einen ersten Leitfähigkeitsmesswerts und des mindestens einen zweiten Leitfähigkeitsmesswerts.

8. Verfahren nach Anspruch 7, wobei das Bestimmen (S300) der Verschmutzungsgradinformationen auf der Grundlage des mindestens einen ersten Leitfähigkeitsmesswerts und des mindestens einen zweiten Leitfähigkeitsmesswerts umfasst:
Bestimmen eines ersten Leitfähigkeitssollwerts entsprechend dem mindestens einen ersten Leitfähigkeitsmesswert;
Bestimmen eines zweiten Leitfähigkeitssollwerts entsprechend dem mindestens einen zweiten Leitfähigkeitsmesswert; und
Bestimmen eines Verhältnisses oder eines Absolutwerts einer Differenz zwischen dem ersten Leitfähigkeitssollwert und dem zweiten Leitfähigkeitssollwert als Ziel-Verschmutzungswert und Bestimmen des Ziel-Verschmutzungswerts als die Verschmutzungsgradinformationen.

9. Verfahren nach Anspruch 7 oder 8, ferner umfassend:
Bestimmen einer Reinigungsstrategie auf der Grundlage der Verschmutzungsgradinformationen.

10. Verfahren nach Anspruch 9, wobei die Reinigungsstrategie umfasst, ob ein Reinigungstuch erneut zu waschen ist, und/oder eine Anzahl erneuter Waschvorgänge des Reinigungstuchs, und/oder ob erneut zu wischen ist, und/oder eine erneut zu wischende Fläche.

11. Verfahren nach Anspruch 10, wobei das Bestimmen (S300) der Reinigungsstrategie auf der Grundlage der Verschmutzungsgradinformationen umfasst:
Bestimmen, ob das Reinigungstuch erneut zu waschen ist, und der Anzahl erneuter Waschvorgänge des Reinigungstuchs auf der Grundlage des Ziel-Verschmutzungswerts und erster vorbestimmter Konfigurationsinformationen, wobei die ersten vorbestimmten Konfigurationsinformationen eine Entsprechung zwischen Verschmutzungswertbereichen und dem Ob bzw. der Anzahl erneuter Waschvorgänge des Reinigungstuchs angeben, wobei ein größerer Verschmutzungswert einer größeren Anzahl erneuter Waschvorgänge entspricht.

12. Verfahren nach Anspruch 10 oder 11, wobei das Bestimmen (S300) der Reinigungsstrategie auf der Grundlage der Verschmutzungsgradinformationen umfasst:
Bestimmen, ob erneut zu wischen ist, und der erneut zu wischenden Fläche auf der Grundlage des Ziel-Verschmutzungswerts und zweiter vorbestimmter Konfigurationsinformationen, wobei die zweiten vorbestimmten Konfigurationsinformationen eine Entsprechung zwischen Verschmutzungswertbereichen und dem Ob des erneuten Wischens und Prozentsätzen der erneut zu wischenden Fläche bezogen auf eine zuvor gewischte Fläche angeben, wobei ein größerer Verschmutzungswert einem größeren Prozentsatz entspricht.

13. Verfahren nach einem der Ansprüche 10 bis 12, ferner umfassend: Bestimmen einer kumulativen Wischdauer des Reinigungstuchs seit einer vorherigen Reinigung;
wobei das Bestimmen der Reinigungsstrategie auf der Grundlage der Verschmutzungsgradinformationen umfasst:
Bestimmen, ob erneut zu wischen ist, und der erneut zu wischenden Fläche auf der Grundlage des Ziel-Verschmutzungswerts und dritter vorbestimmter Konfigurationsinformationen, wobei die dritten vorbestimmten Konfigurationsinformationen eine Entsprechung zwischen Verschmutzungswertbereichen, Zeitdauerbereichen und dem Ob des erneuten Wischens sowie Prozentsätzen der erneut zu wischenden Fläche bezogen auf eine zuvor gewischte Fläche angeben, wobei unter demselben Zeitdauerbereich ein größerer Verschmutzungswert einem größeren Prozentsatz entspricht und unter demselben Verschmutzungswertbereich eine größere Zeitdauer einem kleineren Prozentsatz entspricht.

14. Vorrichtung zum Steuern der Dockingstation nach einem der Ansprüche 1 bis 6, umfassend:
ein erstes Erfassungsmodul (100), das dazu eingerichtet ist, mindestens einen ersten Leitfähigkeitsmesswert der Frischwasserleitung zu erfassen;
ein zweites Erfassungsmodul (200), das dazu eingerichtet ist, mindestens einen zweiten Leitfähigkeitsmesswert der Abwasserleitung zu erfassen; und
ein Bestimmungsmodul (300), das dazu eingerichtet ist, die Verschmutzungsgradinformationen auf der Grundlage des mindestens einen ersten Leitfähigkeitsmesswerts und des mindestens einen zweiten Leitfähigkeitsmesswerts zu bestimmen.

15. Nichtflüchtiges computerlesbares Speichermedium, wobei Anweisungen in dem Speichermedium, wenn sie von einem Prozessor eines Terminals ausgeführt werden, das Terminal dazu veranlassen, das Verfahren nach einem der Ansprüche 7 bis 13 umzusetzen.

## Revendications

1. Station d'accueil, comprenant :
un corps de station (1), muni d'un conduit d'eau propre et d'un conduit d'eaux usées, dans laquelle le conduit d'eau propre est configuré pour fournir de l'eau propre à un dispositif de nettoyage (2), le conduit d'eaux usées est configuré pour évacuer des eaux usées dans le corps de station (1), **caractérisée par** un adoucisseur d'eau (11) prévu sur le conduit d'eau propre ; et
un premier capteur de conductivité (17), un deuxième capteur de conductivité (18) et un processeur, dans laquelle le premier capteur de conductivité est prévu dans le conduit d'eau propre et situé en aval de l'adoucisseur d'eau (11), le deuxième capteur de conductivité est prévu dans le conduit d'eaux usées, et le processeur est configuré pour déterminer des informations de salissure sur la base de résultats de détection du premier capteur de conductivité et du deuxième capteur de conductivité.

2. Station d'accueil selon la revendication 1, dans laquelle le corps de station (1) comprend en outre une chambre à eau propre (15) prévue sur le conduit d'eau propre, et la chambre à eau propre (15) est située en amont de l'adoucisseur d'eau (11).

3. Station d'accueil selon la revendication 1 ou 2, dans laquelle le conduit d'eau propre comprend un conduit principal d'eau propre et une pluralité de ramifications d'eau propre raccordées au conduit principal d'eau propre, l'adoucisseur d'eau (11) est prévu sur le conduit principal d'eau propre, et le premier capteur de conductivité est prévu sur le conduit principal d'eau propre et/ou la ramification d'eau propre.

4. Station d'accueil selon la revendication 3, dans laquelle le corps de station (1) est muni d'un orifice d'injection d'eau configuré pour injecter de l'eau dans le dispositif de nettoyage (2), la pluralité de ramifications d'eau propre comprend une première ramification d'eau propre, une extrémité de la première ramification d'eau propre est raccordée au conduit principal d'eau propre, et une autre extrémité de la première ramification d'eau propre est raccordée à l'orifice d'injection d'eau ; et/ou
le corps de station (1) comprend en outre un bassin de nettoyage, le bassin de nettoyage étant configuré pour nettoyer un chiffon de nettoyage se trouvant sur le dispositif de nettoyage (2), la pluralité de ramifications d'eau propre comprend une deuxième ramification d'eau propre, une extrémité de la deuxième ramification d'eau propre est raccordée au conduit principal d'eau propre, et une autre extrémité de la deuxième ramification d'eau propre est raccordée au bassin de nettoyage.

5. Station d'accueil selon l'une quelconque des revendications précédentes, dans laquelle le corps de station (1) comprend en outre une chambre de liquide de nettoyage configurée pour stocker un liquide de nettoyage, la chambre de liquide de nettoyage est raccordée au conduit d'eau propre par un tuyau de raccordement, et une position de raccordement entre le tuyau de raccordement et le conduit d'eau propre est située en aval de l'adoucisseur d'eau (11).

6. Station d'accueil selon l'une quelconque des revendications précédentes, dans laquelle le corps de station (1) comprend en outre une chambre d'eaux usées prévue sur le conduit d'eaux usées, et la chambre d'eaux usées est raccordée à un bassin de nettoyage situé dans le corps de station (1) par un premier tuyau d'eaux usées ;
le corps de station (1) est muni d'un orifice d'évacuation d'eaux usées configuré pour évacuer les eaux usées, et la chambre d'eaux usées est raccordée à l'orifice d'évacuation d'eaux usées par un deuxième tuyau d'eaux usées ;
le deuxième capteur de conductivité est prévu dans le premier tuyau d'eaux usées et/ou le deuxième tuyau d'eaux usées.

7. Procédé de commande de la station d'accueil selon l'une quelconque des revendications précédentes, comprenant :
l'obtention (S100) d'au moins une première valeur de détection de conductivité du conduit d'eau propre ;
l'obtention (S200) d'au moins une deuxième valeur de détection de conductivité du conduit d'eaux usées ; et
la détermination (S300) des informations de salissure sur la base de ladite au moins une première valeur de détection de conductivité et de ladite au moins une deuxième valeur de détection de conductivité.

8. Procédé selon la revendication 7, dans lequel ladite détermination (S300) des informations de salissure sur la base de ladite au moins une première valeur de détection de conductivité et de ladite au moins une deuxième valeur de détection de conductivité comprend:
la détermination d'une première valeur cible de conductivité en fonction de ladite au moins une première valeur de détection de conductivité ;
la détermination d'une deuxième valeur cible de conductivité en fonction de ladite au moins une deuxième valeur de détection de conductivité ; et
la détermination d'un rapport ou d'une valeur absolue d'une différence entre la première valeur cible de conductivité et la deuxième valeur cible de conductivité en tant que valeur cible de salissure, et la détermination de la valeur cible de salissure en tant qu'informations de salissure.

9. Procédé selon la revendication 7 ou 8, comprenant en outre :
la détermination d'une stratégie de nettoyage sur la base des informations de salissure.

10. Procédé selon la revendication 9, dans lequel la stratégie de nettoyage comprend le fait de savoir s'il faut relaver un chiffon de nettoyage et/ou un nombre de lavages répétés du chiffon de nettoyage et/ou le fait de savoir s'il faut passer à nouveau la serpillière et/ou une zone à passer à nouveau à la serpillière.

11. Procédé selon la revendication 10, dans lequel ladite détermination (S300) de la stratégie de nettoyage sur la base des informations de salissure comprend :
la détermination du fait de savoir s'il faut relaver le chiffon de nettoyage et du nombre de lavages répétés du chiffon de nettoyage sur la base de la valeur cible de salissure et de premières informations de configuration prédéfinies, dans lequel les premières informations de configuration prédéfinies sont indicatives d'une correspondance entre des plages de valeurs de salissure et le fait de savoir s'il faut relaver le chiffon de nettoyage et le nombre de lavages répétés, une valeur de salissure plus grande correspondant à un plus grand nombre de lavages répétés.

12. Procédé selon la revendication 10 ou 11, dans lequel ladite détermination (S300) de la stratégie de nettoyage sur la base des informations de salissure comprend :
la détermination du fait de savoir s'il faut passer à nouveau la serpillière et de la zone à passer à nouveau à la serpillière sur la base de la valeur cible de salissure et de deuxièmes informations de configuration prédéfinies, dans lequel les deuxièmes informations de configuration prédéfinies sont indicatives d'une correspondance entre des plages de valeurs de salissure et le fait de savoir s'il faut passer à nouveau la serpillière et des pourcentages de la zone à passer à nouveau à la serpillière par rapport à une zone précédemment passée à la serpillière, une valeur de salissure plus grande correspondant à un pourcentage plus grand.

13. Procédé selon l'une quelconque des revendications 10 à 12, comprenant en outre : la détermination d'une durée cumulée de passage de la serpillière de nettoyage depuis un nettoyage précédent ;
dans lequel ladite détermination de la stratégie de nettoyage sur la base des informations de salissure comprend :
la détermination du fait de savoir s'il faut passer à nouveau la serpillière et de la zone à passer à nouveau à la serpillière sur la base de la valeur cible de salissure et de troisièmes informations de configuration prédéfinies, dans lequel les troisièmes informations de configuration prédéfinies sont indicatives d'une correspondance entre des plages de valeurs de salissure, des plages de durée et le fait de savoir s'il faut passer à nouveau la serpillière, ainsi que des pourcentages de la zone à passer à nouveau à la serpillière par rapport à une zone précédemment passée à la serpillière, une valeur de salissure plus grande dans une même plage de durée correspondant à un pourcentage plus grand, et une durée plus longue dans une même plage de valeurs de salissure correspondant à un pourcentage plus petit.

14. Appareil de commande de la station d'accueil selon l'une quelconque des revendications 1 à 6, comprenant :
un premier module d'obtention (100), configuré pour obtenir au moins une première valeur de détection de conductivité du conduit d'eau propre ;
un deuxième module d'obtention (200), configuré pour obtenir au moins une deuxième valeur de détection de conductivité du conduit d'eaux usées ; et
un module de détermination (300), configuré pour déterminer les informations de salissure sur la base de ladite au moins une première valeur de détection de conductivité et de ladite au moins une deuxième valeur de détection de conductivité.

15. Support de stockage lisible par ordinateur non transitoire, dans lequel des instructions dans le support de stockage, lorsqu'elles sont exécutées par un processeur d'un terminal, amènent le terminal à mettre en œuvre le procédé selon l'une quelconque des revendications 7 à 13.
